# EUROPEAN PATENT APPLICATION

(11) **EP 4 571 701 A1**
(43) Date of publication of application: **18.06.2025**
(21) Application number: 24219115.3
(22) Date of filing: 11.12.2024
(51) Int. Cl.: G08G 1/005, B60Q 1/50, B60Q 1/52, B60Q 5/00, B60W 30/09, B60W 30/095, B60W 30/18, B60W 50/00, B60W 60/00, G06V 20/58, G06V 20/56, G08G 1/16

(54) **TRANSMITTING STOPPING DISTANCE TO PEDESTRIANS**

(30) Priority: 12.12.2023 US 202318536531
(71) Applicant: Volvo Car Corporation, 405 31 Göteborg (SE)
(72) Inventor: BLEY, Jessica Wilma Elisabeth, 40531 Göteborg (SE); ERIKSSON, Hans Olof Alexander, 40531 Göteborg (SE); ASTORSSON, Niklas Billy Agne, 40531 Göteborg (SE); JOHANSSON, Lisa Alice, 40531 Göteborg (SE); DOGAN, Ebru Burcu, 40531 Göteborg (SE); YENPURE, Rajashree Tanaji, 40513 Göteborg (SE)
(74) Representative: Maiwald GmbH

(57) **Abstract**

Various systems and methods are presented regarding utilizing technology onboard a vehicle to transmit stopping distance of a vehicle to pedestrians. A vehicle can be operating in any of an automatic driving manner, a partially automatic driving manner, or non-automatic driving manner. By utilizing onboard technology/artificial intelligence, the vehicle can determine a position where the vehicle will stop based on current speed of the vehicle and rate of deceleration; and project a visual indicator of the position onto a surface ahead of the vehicle.

## Description

### TECHNICAL FIELD

This application relates to techniques facilitating transmitting stopping distance and/or location of a vehicle to pedestrians.

### BACKGROUND

With roads being commonly shared between drivers, cyclists, and pedestrians, the potential for accidents is of concern, and happens too frequently. One common accident location is crosswalks. Accidents at crosswalks often occur when pedestrians (or others using crosswalks such as cyclists) believe that a vehicle approaching the crosswalk will stop before the crosswalk, when in reality the vehicle will be unable to stop before the crosswalk, thus impacting the pedestrian. Further, often when pedestrians have the right of way to cross the crosswalk, they will still wait for the vehicle to stop out of an abundance of caution.

The above-described background is merely intended to provide a contextual overview of some current issues and is not intended to be exhaustive. Other contextual information may become further apparent upon review of the following detailed description.

### SUMMARY

The following presents a summary to provide a basic understanding of one or more embodiments described herein. This summary is not intended to identify key or critical elements, or delineate any scope of the different embodiments and/or any scope of the claims. The sole purpose of the summary is to present some concepts in a simplified form as a prelude to the more detailed description presented herein.

In one or more embodiments described herein, systems, devices, computer-implemented methods, methods, apparatus and/or computer program products are presented to transmit stopping distance of a vehicle to pedestrians. According to one or more embodiments, a system can be located on a vehicle, wherein the first vehicle can be operating at least autonomously, partially autonomously, and suchlike. The system can comprise a memory that stores computer executable components and a processor that executes the computer executable components stored in the memory. The computer executable components can comprise: a stop distance determination component that determines a position where the vehicle will stop based on current speed of the vehicle and rate of deceleration; and a stop notification component that projects a visual indicator of the position onto a surface ahead of the vehicle.

In a further embodiment, the computer executable components can further comprise a crosswalk identification component that identifies a crosswalk on the surface ahead of the vehicle; and a right of way determination component that scans the crosswalk and a surrounding area to determine if the vehicle has a right of way to pass over the crosswalk, wherein the stop notification component determines the position based on the determination that the vehicle does not have the right of way.

In a further embodiment, the computer executable components can further comprise a vehicle operations component that automatically disables acceleration of the vehicle based on the determination that the vehicle does not have the right of way.

In other embodiments, elements described in connection with the disclosed systems can be embodied in different forms such as computer-implemented methods, computer program products, or other forms. For example, in an embodiment, a computer-implemented method can be performed by a device operatively coupled to a processor, wherein the device can be located on a vehicle. In an embodiment, the method can comprise: determining, by a device comprising a processor located on a vehicle, a position where the vehicle will stop based on current speed of the vehicle and rate of deceleration; and projecting, by the device, a visual indicator of the position onto a surface ahead of the vehicle.

In another embodiment, the method can further comprise, identifying, by the device, a crosswalk on the surface ahead of the vehicle; and scanning, by the device, the crosswalk and a surrounding area for pedestrians; and determining, by the device, if the vehicle has a right of way to pass over the crosswalk, wherein the determination of where the vehicle will stop is actuated on the determination that the vehicle does not have the right of way.

In another embodiment, the method can further comprise, disabling, by the device, acceleration of the vehicle based on the determination that the vehicle does not have the right of way.

Further embodiments can include a computer program product comprising a computer readable storage medium having program instructions embodied therewith, the program instructions executable by a processor, located on a vehicle, can cause the processor to determine a position where the vehicle will stop based on current speed of the vehicle and rate of deceleration; and project a visual indicator of the position onto a surface ahead of the vehicle.

In another embodiment, the program instructions are further executable by the processor to cause the processor to, identify a crosswalk on the surface ahead of the vehicle; and scan the crosswalk and a surrounding area for pedestrians; and determine, if the vehicle has a right of way to pass over the crosswalk, wherein the determination of where the vehicle will stop is actuated based on the determination that the vehicle does not have the right of way.

An advantage of the one or more systems, computer-implemented methods, and/or computer program products can be utilizing various systems and technologies located on a vehicle to identify if pedestrians have a right of way for an upcoming crosswalk, and transmitting, by the vehicle, an indication of the stopping distance and/or location of the vehicle to the pedestrians. By transmitting the stopping distance of the vehicle to the pedestrian, the pedestrian can determine whether to enter, exit or move within the crosswalk, thereby reducing the likelihood of the vehicle being involved in an accident with the pedestrian.

### DESCRIPTION OF THE DRAWINGS

FIG. 1 is schematic of a system that can be located and utilized onboard a vehicle to notify pedestrians of a stopping distance and/or location of a vehicle in accordance with one or more embodiments.
FIG. 2 is a diagram which illustrates a situation involving a vehicle approaching a crosswalk in accordance with one or more embodiments described herein.
FIGs. 3A, 3B, 3C illustrate diagrams of a vehicle transmitting stopping distance to a pedestrian in accordance with one or more embodiments described herein.
FIG. 4 illustrates a diagram of an example scenario in which a vehicle is able to stop before reaching a crosswalk in accordance with one or more embodiments described herein.
FIGS. 5A and 5B illustrate diagrams of example scenarios in which a vehicle is not able to stop before reaching a crosswalk in accordance with one or more embodiments described herein.
FIGS. 6A and 6B illustrate different forms of visual indicators of stopping distance in accordance with one or more embodiments described herein.
FIGS. 7 and 8 illustrate flow diagrams for computer-implemented methodologies to transmit vehicle stopping distance to a pedestrian in accordance with one or more embodiments described herein.
FIG. 9 is a block diagram illustrating an example computing environment in which the various embodiments described herein can be implemented.
FIG. 10 is a block diagram illustrating an example computing environment with which the disclosed subject matter can interact, in accordance with an embodiment.
FIG. 11 presents a table presenting a summary of SAE J3016 detailing respective functions and features during Levels 0-5 of driving automation (per April 2021).

### DETAILED DESCRIPTION

The following detailed description is merely illustrative and is not intended to limit embodiments and/or application or uses of embodiments. Furthermore, there is no intention to be bound by any expressed and/or implied information presented in any of the preceding Background section, Summary section, and/or in the Detailed Description section.

One or more embodiments are now described with reference to the drawings, wherein like referenced numerals are used to refer to like elements throughout. In the following description, for purposes of explanation, numerous specific details are set forth in order to provide a more thorough understanding of the one or more embodiments. It is evident, however, in various cases, that the one or more embodiments can be practiced without these specific details.

It is to be understood that when an element is referred to as being "coupled" to another element, it can describe one or more different types of coupling including, but not limited to, chemical coupling, communicative coupling, electrical coupling, electromagnetic coupling, operative coupling, optical coupling, physical coupling, thermal coupling, and/or another type of coupling. Likewise, it is to be understood that when an element is referred to as being "connected" to another element, it can describe one or more different types of connecting including, but not limited to, electrical connecting, electromagnetic connecting, operative connecting, optical connecting, physical connecting, thermal connecting, and/or another type of connecting.

As used herein, "data" can comprise metadata. Further, ranges A-n are utilized herein to indicate a respective plurality of devices, components, signals etc., where n is any positive integer.

In the various embodiments presented herein, the disclosed subject matter can be directed to utilizing one or more components located on a vehicle being operated in any of a non-autonomous manner, a partially autonomous manner, thorough to a fully autonomous manner. The one or more components can be utilized to transmit stopping distance of a vehicle to pedestrians and/or reduce traffic accidents between vehicles and pedestrians. Various systems and sensors onboard the vehicle, including one or more computer implemented algorithms (including vision algorithms), can be utilized to detect a presence of a crosswalk and/or pedestrian and if the pedestrian has the right of way to use the crosswalk. As a function of the vehicle approaching a crosswalk where a pedestrian has the right of way, the various onboard systems and sensors can determine a position where the vehicle will stop based on the current speed, position and/or rate of deceleration of the vehicle. In some embodiments, the various onboard systems can automatically disable acceleration of the vehicle or begin applying the brakes in order to bring the vehicle to a stop. In a further embodiment, the various onboard systems can automatically activate the headlights of the vehicle to highlight the presence of pedestrians in limited visibility. Accordingly, the various onboard systems and sensors can then broadcast and/or transmit the stopping distance and/or location to the pedestrians.

Various onboard sensors (e.g., cameras, optical sensors, laser sensors, Light Detection and Ranging (LiDAR) sensors, sonar sensors, audiovisual sensors, perception sensors, road lane sensors, motion detectors, velocity sensors and suchlike) can be utilized to determine presence of crosswalks and/or pedestrians preparing to use the crosswalk. The various onboard sensors and systems (e.g., using computer vision algorithms and suchlike) can be utilized to determine if the pedestrian has the right of way to use the crosswalk.

In one or more embodiments, various onboard systems of the vehicle can communicate with and/or receive information from devices external to the vehicle. For example, the various onboard sensors can receive map data indicating the locations of cross walks from online sources. Furthermore, various sensors located on or near the crosswalk (e.g., traffic cameras, proximity sensors and suchlike) can identify the presence of pedestrians located on or near the crosswalk and transit this information to the various onboard systems of the vehicle.

In a non-limiting series of scenarios, the vehicle can (i) determine whether the pedestrian has the right of way (ii) determine the stopping distance/location of the vehicle and (iii) transmit the stopping distance/location of the vehicle to the pedestrians.

In an embodiment, various onboard systems of the vehicle can transmit the stopping distance to the pedestrians via a visual indicator projected by the various onboard systems onto the road ahead of the vehicle. For example, the visual indicator can comprise a bar or line that is projected onto the point on the road the vehicle will come to a stop at. In one or more embodiments, the visual indicator can comprise a solid color, multiple colors, a pattern, and/or include text. In one or more additional embodiments, the various onboard systems can notify the pedestrians of the stopping location via an audio signal or message output by external speakers of the vehicle. In one or more additional embodiments, the various onboard systems can notify the pedestrians of the stopping location via an electronic message sent to a user device (e.g., a smart phone, smart watch and suchlike).

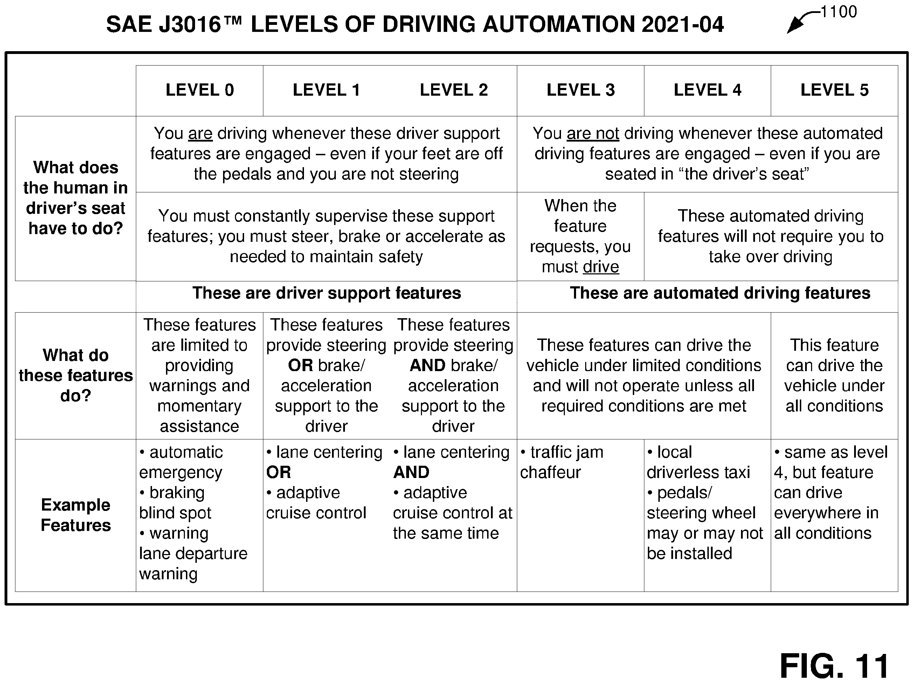

Regarding the terms "autonomous" operation (alternatively referred to as "driving automation"), to enable the level of sophistication of operation of a vehicle to be defined across the industry by both suppliers and policymakers, standards are available to define the level of autonomous operation or driving automation. For example, the International Standard J3016 *Taxonomy and Definitions for Terms Related to Driving Automation Systems for On-Road Motor Vehicles* has been developed by the Society of Automotive Engineers (SAE) and defines six levels of operation of a driving automation system(s) that performs part or all of the dynamic driving task (DDT) on a sustained basis. The six levels of definitions provided in SAE J3016 range from no driving automation (Level 0) to full driving automation (Level 5), in the context of vehicles and their operation on roadways. Levels 0-5 of SAE J3016 are summarized below and further presented in FIG. 11, Table 1100.

Level 0 (No Driving Automation): At Level 0, the vehicle is manually controlled with the automated control system (ACS) having no system capability, the driver provides the DDT regarding steering, braking, acceleration, negotiating traffic, and suchlike. One or more systems may be in place to help the driver, such as an emergency braking system (EBS), but given the EBS technically doesn't drive the vehicle, it does not qualify as automation. The majority of vehicles in current operation are Level 0 automation.

Level 1 (Driver Assistance/Driver Assisted Operation): This is the lowest level of automation. The vehicle features a single automated system for driver assistance, such as steering or acceleration (cruise control) but not both simultaneously. An example of a Level 1 system is adaptive cruise control (ACC), where the vehicle can be maintained at a safe distance behind a lead vehicle (e.g., operating in front of the vehicle operating with Level 1 automation) with the driver performing all other aspects of driving and has full responsibility for monitoring the road and taking over if the assistance system fails to act appropriately.

Level 2 (Partial Driving Automation/Partially Autonomous Operation): The vehicle can (e.g., via an advanced driver assistance system (ADAS)) steer, accelerate, and brake in certain circumstances, however, automation falls short of self-driving as tactical maneuvers such as responding to traffic signals or changing lanes can mainly be controlled by the driver, as does scanning for hazards, with the driver having the ability to take control of the vehicle at any time.

Level 3 (Conditional Driving Automation/Conditionally Autonomous Operation): The vehicle can control numerous aspects of operation (e.g., steering, acceleration, and suchlike), e.g., via monitoring the operational environment, but operation of the vehicle has human override. For example, the driver automation system can prompt a driver to intervene when a scenario is encountered that the onboard system cannot navigate (e.g., with an acceptable level of operational safety), accordingly, the driver must be available to take over operation of the vehicle at any time.

Level 4 (High Driving Automation/High Driving Operation): advancing on from Level 3 operation, while under Level 3 operation the driver must be available, with Level 4, the vehicle can operate without human input or oversight but only under select conditions defined by factors such as road type, geographic area, environments limiting top speed (e.g., urban environments), wherein such limited operation is also known as "geofencing". Under Level 4 operation, a human (e.g., driver) still has the option to manually override automated operation of the vehicle.

Level 5 (Full Driving Automation/Full Driving Operation): Level 5 vehicles do not require human attention for operation, with operation available on any road and/or any road condition that a human driver can navigate (or even beyond the navigation/driving capabilities of a human). Further, operation under Level 5 is not constrained by the geofencing limitations of operation under Level 4. In an embodiment, Level 5 vehicles may not even have steering wheels or acceleration/brake pedals. In an example of use, a destination is entered for the vehicle (e.g., by a passenger, by a supply manager where the vehicle is a delivery vehicle, and suchlike), wherein the vehicle self-controls navigation and operation of the vehicle to the destination.

To clarify, operations under levels 0-2 can require human interaction at all stages or some stages of a journey by a vehicle to a destination. Operations under levels 3-5 do not require human interaction to navigate the vehicle (except for under level 3 where the driver is required to take control in response to the vehicle not being able to safely navigate a road condition).

As referenced herein, DDT relates to various functions of operating a vehicle. DDT is concerned with the operational function(s) and tactical function(s) of vehicle operation, but may not be concerned with the strategic function. Operational function is concerned with controlling the vehicle motion, e.g., steering (lateral motion), and braking/acceleration (longitudinal motion). Tactical function (aka, object and event detection and response (OEDR)) relates to the navigational choices made during a journey to achieve the destination regarding detecting and responding to events and/or objects as needed, e.g., overtake vehicle ahead, take the next exit, follow the detour, and suchlike. Strategic function is concerned with the vehicle destination and the best way to get there, e.g., destination and way point planning. Regarding operational function, a Level 1 vehicle under SAE J3016 controls steering or braking/acceleration, while a Level 2 vehicle must control both steering and braking/acceleration. Driving automation of vehicles at Levels 3, 4, and 5 under SAE J3016 involves the vehicle having full control of the operational function and the tactical function. Level 2 operation may involve full control of the operational function and tactical function but the driver is available to take control of the tactical function.

Accordingly, the terms "autonomous" and "driving automation" as used herein regarding operation of a vehicle with or without a human available to assist the vehicle in self-operation during navigation to a destination, can relate to any of Levels 1-5. In an embodiment, for example, the terms "autonomous operation", "autonomously" or "automatic driving" can relate to a vehicle operating at least with Level 2 operation, e.g., a minimum level of operation is Level 2: partial driving automation, per SAE J3016. Hence, while Level 2, partial driving automation may be a minimum level of operation, higher levels of operation, e.g., Levels 3-5, are encompassed in operation of the vehicle at Level 2 operation. Similarly, a minimum Level 3 operation encompasses Levels 4-5 operation, and minimum Level 4 operation encompasses operation under Level 5 under SAE J3016.

It is to be appreciated that while the various embodiments presented herein are directed towards to one or more vehicles (e.g., vehicle 102) operating in an autonomous or automatic driving manner (e.g., as an autonomous vehicle (AV)), the various embodiments presented herein are not so limited and can be implemented with a group of vehicles operating in any of an autonomous manner (e.g., Level 5 of SAE J3016), a partially autonomous manner (e.g., Level 1 of SAE J3016 or higher), or in a non-autonomous manner (e.g., Level 0 of SAE J3016). For example, the vehicle can be operating in an autonomous or automatic driving manner (e.g., any of Levels 3-5), a partially autonomous or partially automatic driving manner (e.g., any of levels 1-2), or in a non-autonomous or non-automatic driving manner (e.g., Level 0).

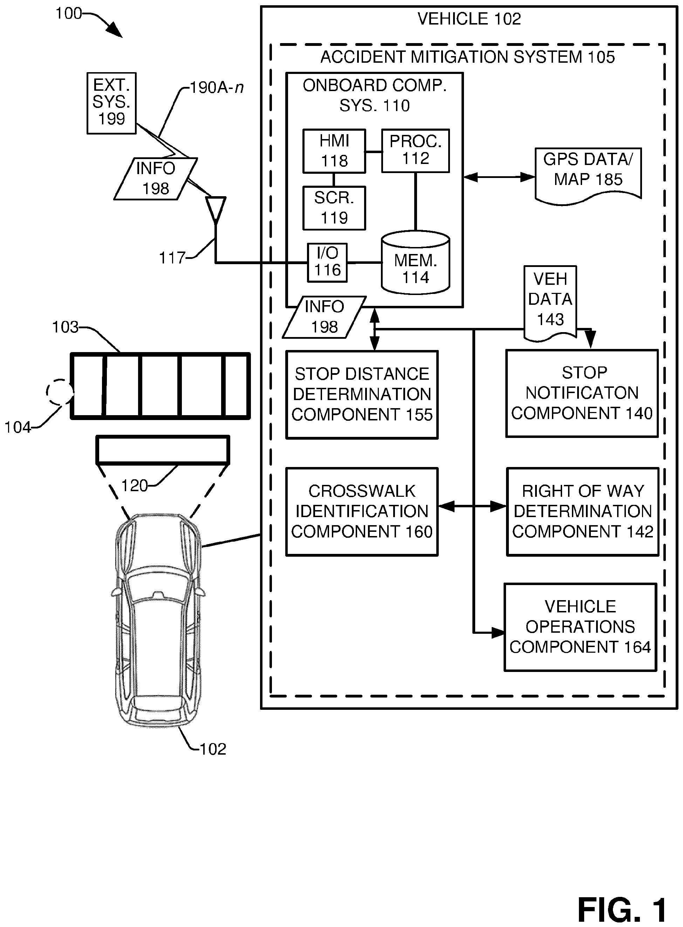

Turning now to the drawings, FIG. 1 illustrates the concept of a vehicle 102 notifying a pedestrian 104 of stopping distance whereby vehicle 102 is traveling in a direction toward crosswalk 103.

FIG. 1, further illustrates a system 100 that can be located and utilized onboard a vehicle to reduce traffic accidents between the vehicle and pedestrians, in accordance with one or more embodiments. System 100 comprises a vehicle 102 with an accident mitigation system (AMS) 105 located thereon, wherein vehicle 102 can be operating in any of a non-autonomous, partially autonomous, or fully autonomous manner (per FIG. 11). The AMS 105 can comprise various devices/components, such as an onboard computer system (OCS) 110, wherein the OCS 110 can be a vehicle control unit (VCU). The OCS 110 can be utilized to provide overall operational control and/or operation of vehicle 102.

In an embodiment, the OCS 110 can be configured to operate/control/monitor various vehicle operations, wherein the various operations can be further controlled by one or more computer executable components communicatively coupled to the OCS 110. A vehicle operation component 164 can include, in a non-limiting list, any of: a navigation sub-component configured to navigate vehicle 102 along a road as well as to control steering of the vehicle 102, e.g., in and out of a parking spot; and further, the vehicle operation component 164 can further comprise an engine sub-component configured to control operation, e.g., start/stop, of an engine/motor configured to propel the vehicle 102; and a braking sub-component configured to slow down or stop the vehicle 102 or disable acceleration; wherein the respective components can be utilized to drive/stop vehicle 102.

The vehicle operation component 164 can further comprise various sensors and/or cameras configured to monitor operation of vehicle 102 and further obtain imagery and other information regarding an environment/surroundings vehicle 102 is operating in. The sensors/cameras can include any suitable detection/measuring device, including cameras, optical sensors, laser sensors, Light Detection and Ranging (LiDAR) sensors, sonar sensors, audiovisual sensors, perception sensors, road lane sensors, motion detectors, velocity sensors, and the like, as employed in such applications as simultaneous localization and mapping (SLAM), and other computer-based technologies and methods utilized to determine an environment being navigated by vehicle 102 and the location of the vehicle 102 within the environment (e.g., location mapping). Digital images, data, and the like generated by sensors/cameras can be analyzed by crosswalk identification component 160 to identify crosswalks ahead of the vehicle, and by right of way determination component 142 to identify pedestrians in or near the cross walk and determine whether the pedestrians or vehicle 102 has the right of way. In an embodiment, a camera can capture visual data from the environment/surroundings, while a sensor can operate based upon transmission of transmission and reflection of a signal (e.g., an infra-red (IR) signal), per detection beam(s), as further described herein.

As shown, AMS 105 can further include a stop distance determination component 155 that can determine a stopping distance and/or location based on the current location, speed and rate of deceleration of the vehicle, as well as current road conditions (e.g., weather, traffic, etc..) and/or road features (e.g., hills, turns, inclines and etc..). As shown, the stop distance determination component 155 can be communicatively coupled to any subcomponent of AMS 105, the OCS 110, the vehicle operations component 164, and other components located on board vehicle 102. In some embodiments, stop distance determination component 155 can determine the stopping distance in response to the breaks of vehicle 102 being applied, or due to a lack of acceleration of vehicle 102.

A crosswalk identification component 160 can be included in the AMS 105, wherein the crosswalk identification component 160 can analyze information (e.g., digital images, data) from various onboard sensors and cameras to identify respective crosswalk markings and suchlike, from which the crosswalk identification component 160 can identify crosswalks and/or other pedestrian crossing points (e.g., traffic lights, stop signs, etc.) ahead of vehicle 102. The crosswalk identification component 160 can further receive information from a GPS data/map system 185, wherein the GPS data/map system 185 can provide information to help identify upcoming crosswalks (e.g., location of vehicle 102, location of crosswalks, and the like). Further, the crosswalk identification component 160 can receive road information from an external system 199 (e.g., a remote GPS system, a remote road information system, street cameras, and suchlike) providing further information regarding upcoming crosswalks or other crossing points. In some embodiments, crosswalk identification component 160 can identify other crossing points such as traffic lights or stop signs and treat such crossing points as crosswalks, even if the pavement lacks a visual painted crosswalk.

The AMS 105 can further include a right of way determination component 142 which can be configured to identify pedestrians and determine whether a pedestrian or vehicle 102 has the right of way over the crosswalk or other crossing point. For example, the right of way determination component 142 (e.g., via data generated by the sensors/cameras) can detect the presence of a pedestrian on or near a crosswalk and determine whether the pedestrian or the vehicle has the right of way based on position and travel direction of the pedestrian as well as local traffic laws or ordinances. In some embodiments, if the right of way determination component 142 determined that a pedestrian has the right of way, the stop distance determination component 155 can be actuated and the vehicle operations component 164 can autonomously or automatically apply the brakes of vehicle 102 and/or disable acceleration.

The AMS 105 can further include a stop notification component 140 that can transmit a notification of stopping distance/location of vehicle 102 to pedestrians. For example, based on the stop distance/location as determined by stop distance determination component 155, stop notification component 140 can actuate one or more devices onboard vehicle 102 to project a visual indicator of the stop location of vehicle 102 onto the surface of the road. In one or more embodiments, the visual indicator can comprise a solid line or bar indicating the position vehicle 102 will come to a complete stop at. In additional embodiments, stop notification component 140 can actuate one or more internal or external vehicle speakers to transmit an audio message that notifies pedestrians of the stop distance/location of vehicle 102 or if vehicle 102 will stop before an upcoming crosswalk or other crossing point. In some embodiments, stop notification component 140 can display the visual indicator in response to a determination by right of way determination component 142 that a pedestrian has the right of way across a crosswalk. In some embodiments, stop notification component can display the visual indicator in response to the breaks of vehicle 102 being applied, or due to a lack of acceleration of vehicle 102.

As mentioned, the AMS 105 can further comprise various algorithms respectively configured/trained to determine information, make predictions, classify entities, etc., regarding any of the road being navigated, upcoming crosswalks or crossing points; a velocity, location, movement and/or trajectory, etc., of a pedestrian 104 navigating a crosswalk; location/operation of vehicle 102; stopping distance of the vehicle 102, and suchlike. The algorithms can be configured to provide artificial intelligence (AI) to the various components onboard vehicle 102, and, in a non-limiting list, can include a computer vision algorithm(s), a digital imagery algorithm(s), position prediction, velocity prediction, direction prediction, and suchlike, to enable the respective determinations, predictions, etc., to be achieved, per the various embodiments presented herein. The algorithms can be configured to provide determinations/information regarding pedestrian 104.

It is to be appreciated that while FIG. 1 presents stop notification component 140 generating/transmitting indication of stopping distance/location, any of the components included in the AMS 105 can generate and transmit notifications to one or more other components included in the AMS 105.

As shown in FIG. 1, the OCS 110 can further include a processor 112 and a memory 114, wherein the processor 112 can execute the various computer-executable components, functions, operations, etc., presented herein. The memory 114 can be utilized to store the various computer-executable components, functions, code, etc., as well as algorithms, stopping distance/location, information (e.g., motion, trajectory) regarding pedestrian 104, information (e.g., location, parked direction, motion, trajectory, operations) regarding vehicle 102, information (e.g., location, direction) regarding upcoming crosswalks and suchlike (as further described herein). In an embodiment, the vehicle operation component 164 can form a standalone component communicatively coupled to the OCS 110, and while not shown, the vehicle operation component 164 can operate in conjunction with a processor (e.g., functionally comparable to processor 112) and a memory (e.g., functionally comparable to memory 114) to enable navigation, steering, braking/acceleration, etc., of vehicle 102, as well as operation of onboard systems/devices to notify pedestrians of stopping distance/location. In another embodiment, the vehicle operation component 164 can operate in conjunction with the processor 112 and memory 114 of the OCS 110, wherein the various control functions (e.g., navigation, steering, braking/acceleration) can be controlled by the OCS 110. Similarly, the stop distance determination component 155, stop notification component 140, crosswalk identification component 160, and right of way determination component 142 can form standalone components communicatively coupled to the OCS 110, and while not shown, the stop distance determination component 155, stop notification component 140, crosswalk identification component 160, and right of way determination component 142 can operate in conjunction with a processor (e.g., functionally comparable to processor 112) and a memory (e.g., functionally comparable to memory 114) to enable transmitting of stopping distance/location to pedestrians during operation of vehicle 102. In another embodiment, the stop distance determination component 155, stop notification component 140, crosswalk identification component 160, and right of way determination component 142 can operate in conjunction with the processor 112 and memory 114 of the OCS 110, wherein the various accident detection functions can be controlled by the OCS 110. In a further embodiment, the OCS 110, vehicle operation component 164, the stop distance determination component 155, stop notification component 140, crosswalk identification component 160, and right of way determination component 142 (and respective sub-components) can operate using a common processor (e.g., processor 112) and memory (e.g., memory 114).

As further shown, the OCS 110 can include an input/output (I/O) component 116, wherein the I/O component 116 can be a transceiver configured to enable transmission/receipt of information 198 (e.g., GPS map data, road conditions, crosswalk locations, notifications of stopping distance/location and the like) between the OCS 110 and any external system(s) (e.g., external system 199), e.g., a cellphone, a GPS data system, a computer-based system, and suchlike. I/O component 116 can be communicatively coupled, via an antenna 117, to the remotely located devices and systems (e.g., external system 199). Transmission of data and information between the vehicle 102 (e.g., via antenna 117 and I/O component 116) and the remotely located devices and systems can be via the signals 190A-n. Any suitable technology can be utilized to enable the various embodiments presented herein, regarding transmission and receiving of signals 190A-n. Suitable technologies include BLUETOOTH^{®}, cellular technology (e.g., 3G, 4G, 5G), internet technology, ethernet technology, ultra-wideband (UWB), DECAWAVE^{®}, IEEE 802.15.4a standard-based technology, Wi-Fi technology, Radio Frequency Identification (RFID), Near Field Communication (NFC) radio technology, and the like.

In an embodiment, the OCS 110 can further include a human-machine interface (HMI) 118 (e.g., a display, a graphical-user interface (GLTI)) which can be configured to present various information including imagery of /information regarding pedestrian 104, components of vehicle 102, notification of a right of way, the road, alarms, warnings, information received from onboard and external systems and devices, etc., per the various embodiments presented herein. The HMI 118 can include an interactive display 119 to present the various information via various screens presented thereon, and further configured to facilitate input of information/settings/etc., regarding operation of the vehicle 102.

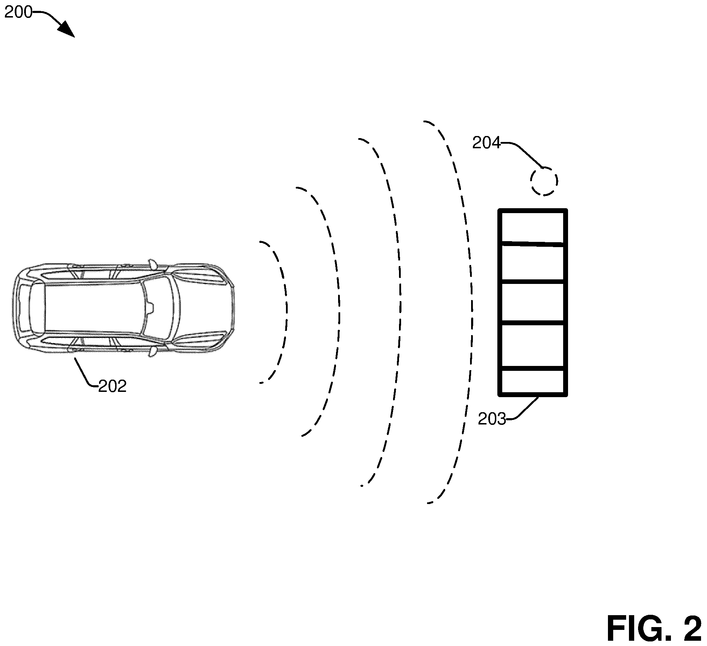

Turning to FIG. 2, diagram 200 illustrates a situation involving a vehicle 202 approaching a crosswalk 203 in accordance with one or more embodiments described herein. As vehicle 202 travels down a road or street, crosswalk identification component 160 can identify the location of upcoming crosswalks ahead of vehicle 202. For example, crosswalk identification component 160 can use one or more sensors onboard vehicle 202 (e.g., optical sensors, laser sensors, Light Detection and Ranging (LiDAR) sensors, sonar sensors, audiovisual sensors, perception sensors, road lane sensors, motion detectors, velocity sensors, and the like) to detect and identify crosswalk 203. In another embodiment, crosswalk identification component 160 can utilize GPS mapping data, satellite road imagery, and/or other external data sources transmitted to the vehicle via antenna 117 to identify crosswalk 203. For example, crosswalk identification component 160 can utilize image processing algorithms to identify crosswalks from top-down imagery of roadways or can receive a list of GPS coordinates of crosswalks within a city. In an another embodiment, crosswalk identification component 160 can utilize know locations of cross walks stored in onboard computer system 101 or within a cloud architecture.

Once crosswalk identification component 160 has identified crosswalk 203, then right of way determination component 142 can begin scanning (e.g., utilizing sensor such as optical sensors, laser sensors, Light Detection and Ranging (LiDAR) sensors, sonar sensors, audiovisual sensors, perception sensors, road lane sensors, motion detectors, velocity sensors, and the like) for pedestrians in or near crosswalk 203, such as pedestrian 204. In some embodiments, in response to detection of a crosswalk, the various onboard systems can automatically activate the headlights of vehicle 202 to aid in the detection of pedestrians in limited visibility. In some embodiments, after identifying crosswalk 203, crosswalk identification component 160 can store the location of crosswalk 203 in onboard computer system 101 or within a cloud architecture for future use.

Once pedestrian 204 has been identified, right of way determination component 142 can determine whether vehicle 202 or pedestrian 204 has the right of way over crosswalk 203. In an embodiment, right of way determination component 142 can utilize one or more algorithms and/or AI processes (such as classifiers described in greater detail below) with input data comprising information such as pedestrian location relative to the crosswalk, pedestrian speed, vehicle location relative to the crosswalk, pedestrian directional orientation, local traffic law/ordinances, road features, traffic lights, stop signs, and the like to determine whether pedestrian 204 or vehicle 202 has the right of way. For example, if pedestrian 204 is within a defined distance metric of crosswalk 203 or is already crossing crosswalk 203, then right of way determination component 142 can determine that pedestrian 204 has the right of way. In another example, if pedestrian 204 is moving away from crosswalk 203, then right of way determination component 142 can determine that vehicle 202 has the right of way. In a further example, if right of way determination component 142 identifies a stop sign or traffic light stop signal at crosswalk 203, then right of way determination component 142 can determine that pedestrian 204 has the right of way. In some embodiments, if pedestrian 204 is determined to have the right of way, then vehicle operations component 164 can automatically or autonomously disable acceleration of vehicle 202 and/or automatically apply the brakes of vehicle 202 to begin to slow vehicle 202. It should be appreciated that while the above examples describe operations in regard to one pedestrian, right of way determination component 142 can determine the right of way in situations involving multiple pedestrians.

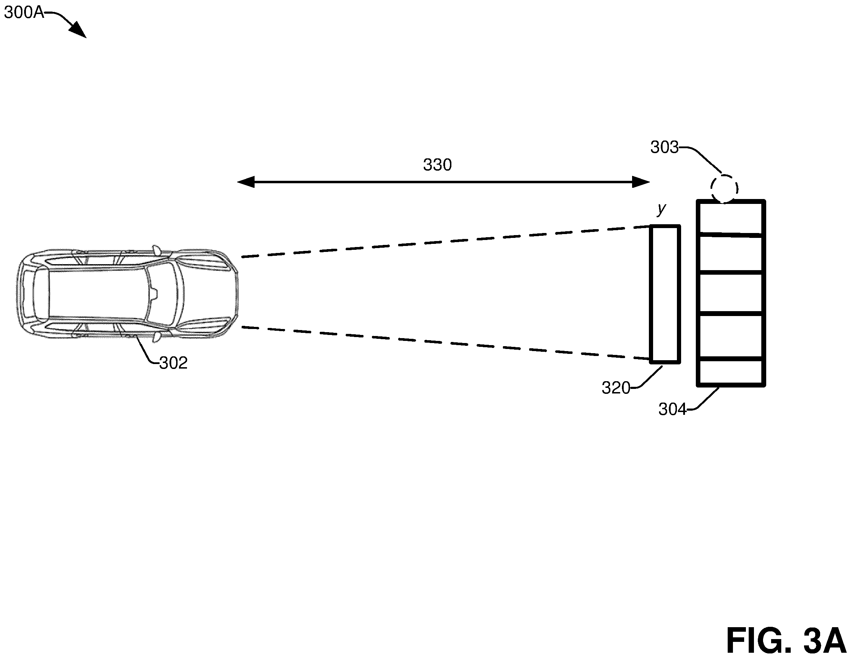

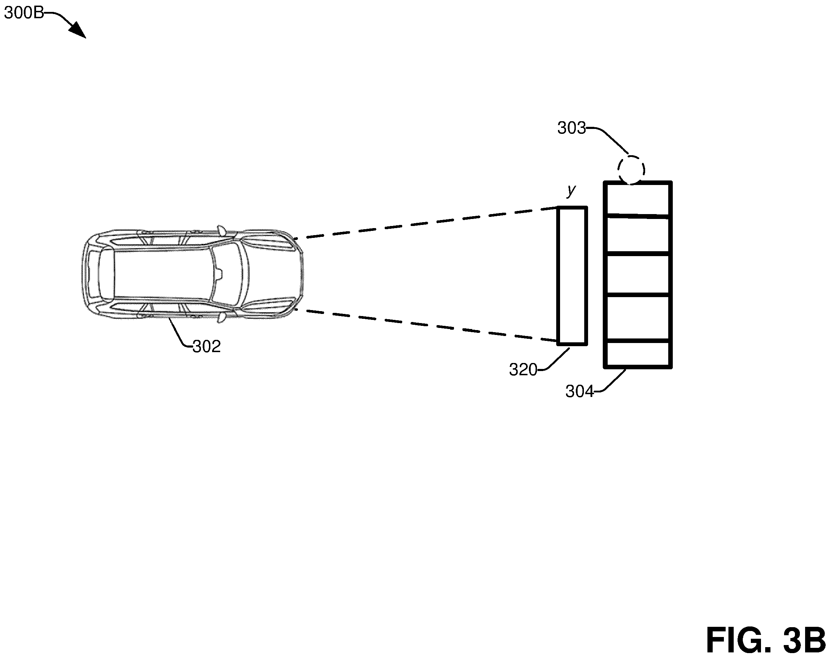

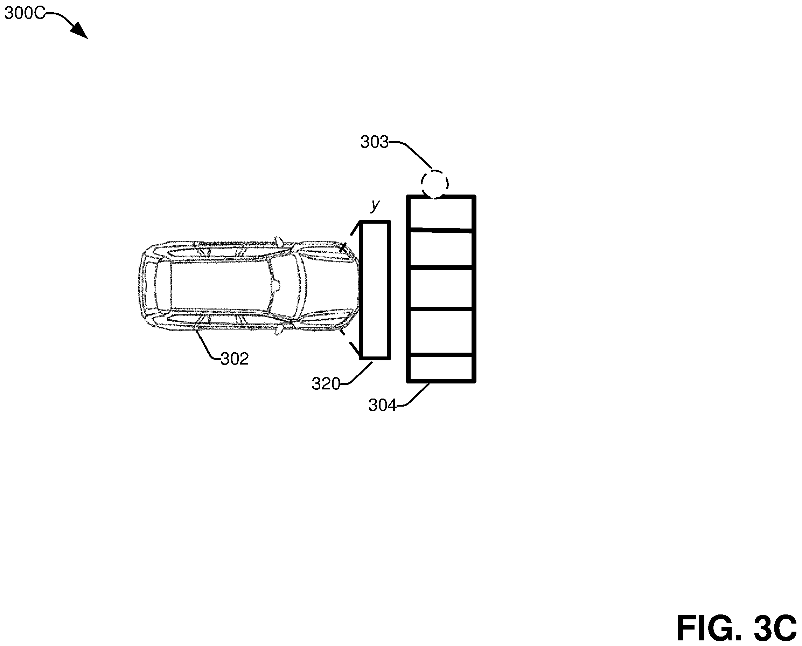

FIGS. 3A-3C illustrate diagrams 300A-C of a vehicle transmitting stopping distance to a pedestrian in accordance with one or more embodiments described herein. In response to an identification of crosswalk 304 by crosswalk identification component 160 and a determination that pedestrian 303 has the right of way, stop distance determination component 155 can determine a stopping distance/location of vehicle 302. For example, based on characteristics of vehicle 302 (e.g., vehicle weight, brakes quality, tire quality and the like) vehicle speed and rater of deceleration, and road conditions (e.g., wet or dry pavement, weather conditions, road incline or decline and the like), stop distance determination component 155 can determine a distance 330 or position where vehicle 302 will come to a complete stop.

Once stop distance 330 has been determined, then stop distance notification component 140 can transmit the stopping distance 330 to pedestrian 303. In one or more embodiments, stop distance notification component 140 can transmit a visual indicator 320 of the location vehicle 302 will stop at based on stopping distance 330. For example, stop distance notification component 140 can actuate one or more lights of projectors located on the front of vehicle 302 to project visual indicator 320 onto the surface of the road or pavement at position*y* (e.g., the stopping position based on distance 330). In another example, stop distance notification component 140 can signal (e.g., via antenna 117) lights/projectors located within the road surface and/or projectors mounted to sides of the road or above the road to project visual indicator 320. In some embodiments, the visual indicator can comprise a solid line, stripe or bar of a color, wherein the color of light used to project the visual indicator is based on time of day or weather conditions. For example, at night on a road with no precipitation, a bright white stripe may be used to better appear against the surface of the road. In another example a color, such as red, can be utilized on a snow-covered road. In another embodiment, stop distance notification component 140 can actuate one or more speakers onboard vehicle 302 or located external to vehicle 302 to emit an audio message notifying pedestrian 303 of the stopping location of vehicle 302 or whether vehicle 302 will stop before crosswalk 304. In a further example, stop notification component 140 can transmit a text or audio message to a device of pedestrian 303 (e.g., smart phone, smart watches and the like) notifying pedestrian 303 of the stopping distance and/or position of vehicle 302. As shown in diagrams 300B and 300C, as vehicle 302 continues moving towards crosswalk 304 as vehicle 302 comes to a stop, visual indicator 320 remains at position y, to continue notifying pedestrian 303 of the stopping position of vehicle 302. As shown in diagram 300C, vehicle 302 can come to a complete stop at or before visual indicator 320.

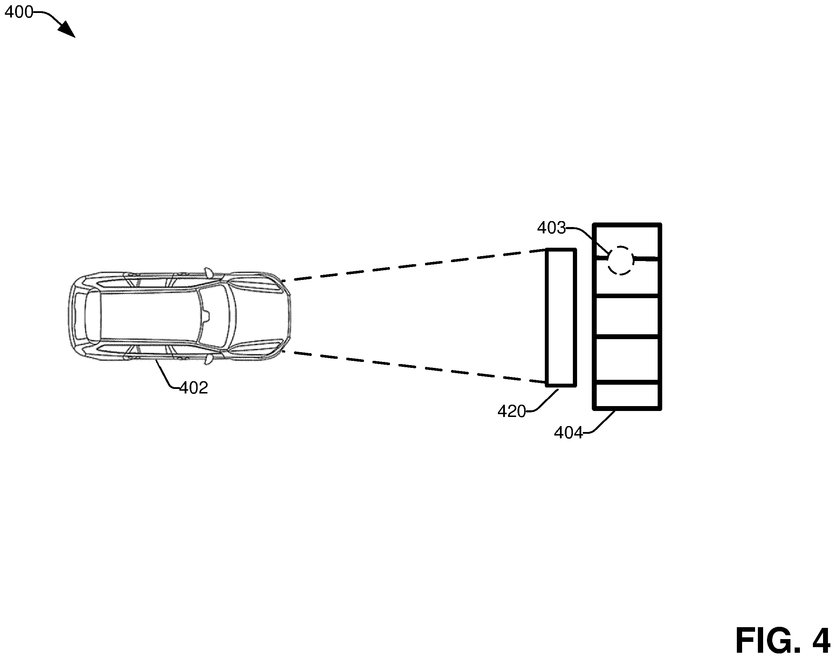

Turing to FIG. 4, diagram 400 illustrates an example scenario in which a vehicle is able to stop before reaching a crosswalk. As shown, visual indicator 420 is located before crosswalk 404, indicating that vehicle 402 will come to a complete stop before reaching crosswalk 404. Accordingly, pedestrian 403 knows they can enter crosswalk 404 safely, as vehicle 402 will stop in time.

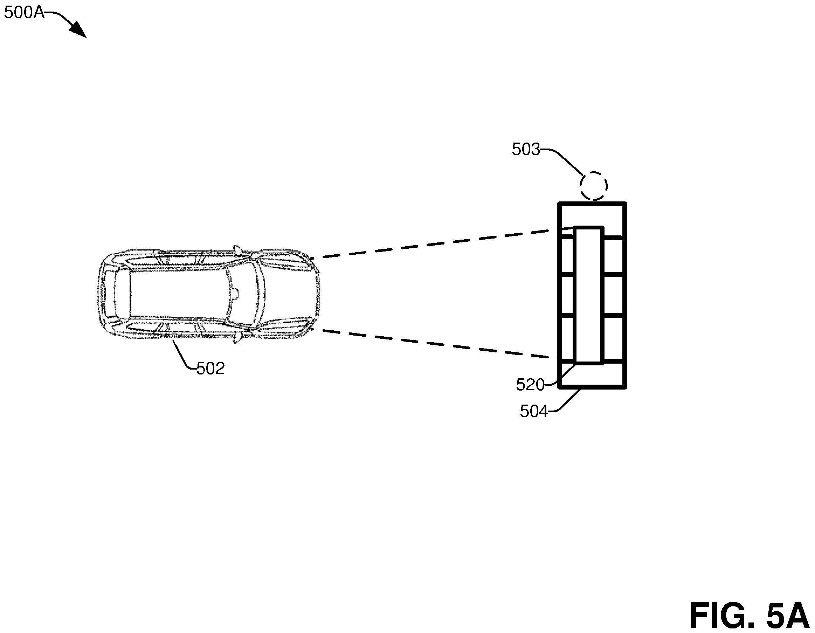

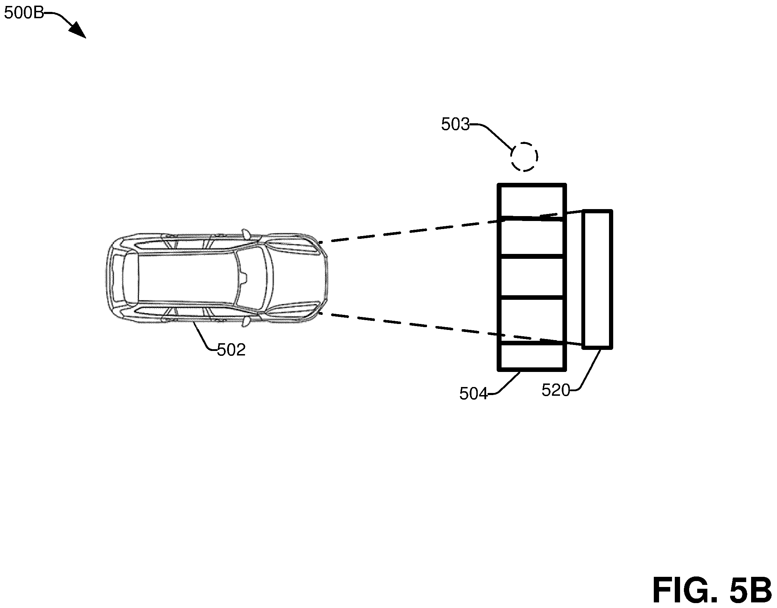

FIGS. 5A and 5B illustrate example scenarios 500A and 500B in which a vehicle is not able to stop before reaching a crosswalk. As shown in scenario 500A, the visual indicator 520 is located within crosswalk 504, indicating that vehicle 502 will be unable to stop before crosswalk 504. Therefore, pedestrian 503 is aware that they should not enter crosswalk 504 as it is not safe to do so. As shown in scenario 500B, the visual indicator 520 is located after crosswalk 504, indicating that vehicle 502 will be unable to stop before crosswalk 504. Therefore, pedestrian 503 is aware that they should not enter crosswalk 504 as it is not safe to do so.

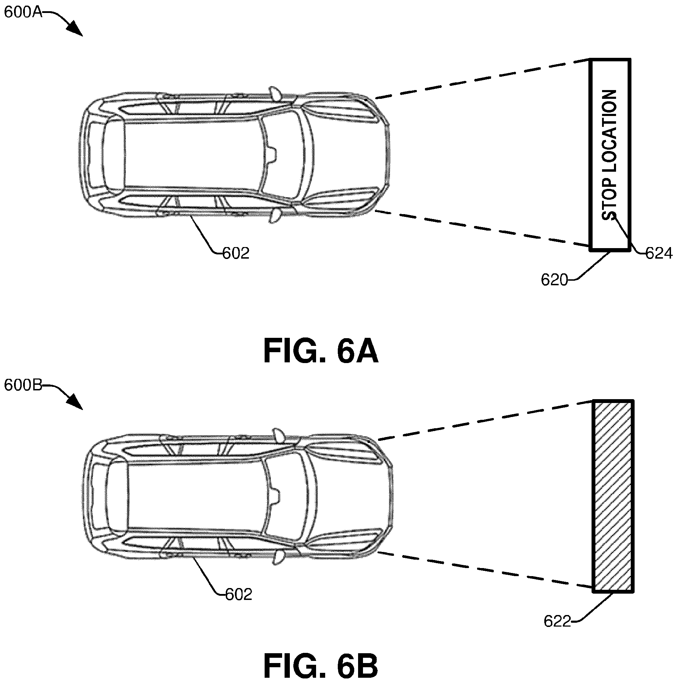

Turning to FIGS. 6A and 6B, diagrams 600A and 600B illustrate different forms of visual indicators of stopping distance in accordance with one or more embodiments described herein. As described above in reference to FIGS. 1, and 3A-5B, the visual indicator of stopping location can be projected onto the road surface and can comprise a solid line, stripe or bar of colored light. Alternatively, as shown in diagram 600A, in one or more embodiments, the visual indicator can comprise a text message 624 located within a bar or rectangle shape. Further, as shown in diagram 600B, in some embodiments, visual indicator 622 can comprise a pattern or multiple colors in order to improve visibility of visual indicator 622 based on road conditions and/or time of day. It should be appreciated that use of any form, shape or color of visual indicator of stopping distance projected onto the road surface is envisioned. Furthermore, in some embodiments the visual indicator can be flashed on and off rapidly in order to better gain the attention of pedestrians. In some embodiments, the stop distance determination component 155 can determine if the vehicle will stop before the crosswalk based on a comparison of the stopping distance and the distance to the crosswalk. For example, if the vehicle will stop before the crosswalk the visual indicator can comprise a first pattern and if the vehicle will not stop before the crosswalk a second pattern can be utilized.

As described herein, one or more embodiments can utilize Artificial Intelligence models such as classifiers in order to make predictions and/or determinations. A support vector machine (SVM) is an example of a classifier that can be employed. The SVM operates by finding a hypersurface in the space of possible inputs that splits the triggering input events from the non-triggering events in an optimal way. Intuitively, this makes the classification correct for testing data that is near, but not identical to training data. Other directed and undirected model classification approaches include, e.g., naive Bayes, Bayesian networks, decision trees, neural networks, fuzzy logic models, and probabilistic classification models providing different patterns of independence can be employed. Classification as used herein is inclusive of statistical regression that is utilized to develop models of priority.

As will be readily appreciated from the subject specification, the various embodiments can employ classifiers that are explicitly trained (e.g., via a generic training data) as well as implicitly trained (e.g., via observing user behavior, receiving extrinsic information). For example, SVM's are configured *via* a learning or training phase within a classifier constructor and feature selection module. Thus, the classifier(s) can be used to automatically learn and perform a number of functions, including but not limited to determining according to predetermined criteria, the presence of crosswalks ahead of the vehicle, the presence of pedestrians on or near the crosswalk, whether the vehicle or a pedestrian has a right of way over the crosswalk, and the distance required for the vehicle to come to a stop based on current speed, rate of deceleration and road conditions.

As described *supra,* inferences can be made, and operations performed, based on numerous pieces of information. For example, as vehicle 102 monitors and gathers information regarding the actions/motions of pedestrians, vehicle stopping distances, and visual or other indicators of crosswalks, a database of relevant information can be created. As the database of information accumulates (e.g., in memory 114) regarding interactions between pedestrians, the vehicle, and crosswalks, the data is analyzed to determine converging patterns such that inferences can be made regarding the presence of crosswalks, the intents of pedestrians, and whether a vehicle or a pedestrian will have the right of way.

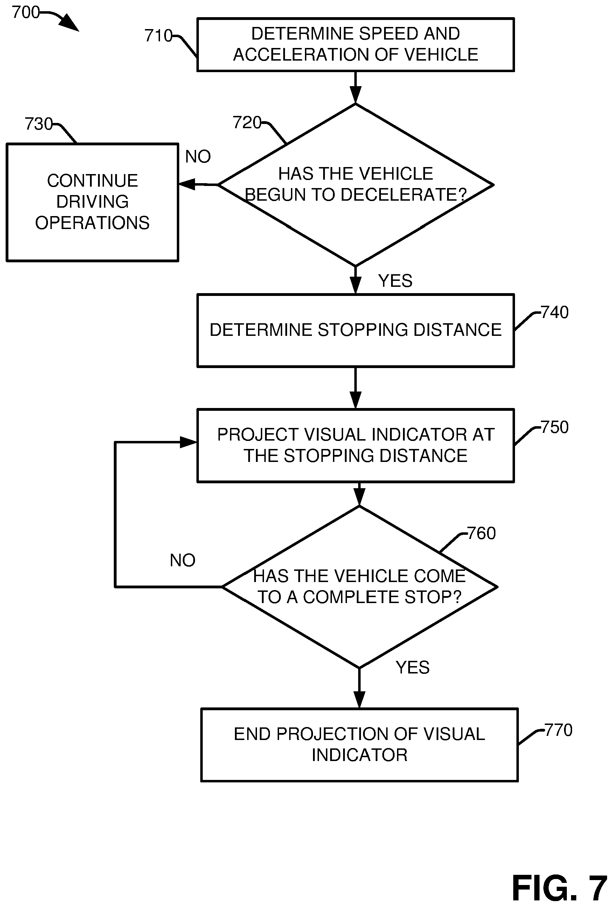

FIG. 7 illustrates a flow diagram 700 for a computer-implemented methodology to transmit vehicle stopping distance to a pedestrian in accordance with one or more embodiments described herein.

At 710, speed and a rate of acceleration of a vehicle (e.g., vehicle 102) can be determined (e.g., by stop distance determination component 155 and/or vehicle operations component 164).

At 720, a determination can be made whether the vehicle (e.g., vehicle 102) is decelerating. In response to NO, the computer methodology can proceed to step 730 and the vehicle can continuance of normal driving operations. In response to YES, the vehicle is decelerating, methodology 700 can advance to step 740, wherein a determination of stopping distance of the vehicle is made.

At 740, a determination of stopping distance of the vehicle (e.g., vehicle 102) can be made (e.g., by stop distance determination component 155) based on the current speed and rate of deceleration of the vehicle as well as current road conditions such as weather and road gradient.

At 750, in response to a determination of the stopping distance, the vehicle (e.g., vehicle 102) can project a visual indicator (e.g., visual indicator 120) at the position the vehicle will come to a complete stop at based on the stopping distance.

At 760, in response to a determination that the vehicle has come to a complete stop, methodology 700 can proceed to step 770 and end projection of the visual indicator, otherwise, projection of the visual indicator can continue.

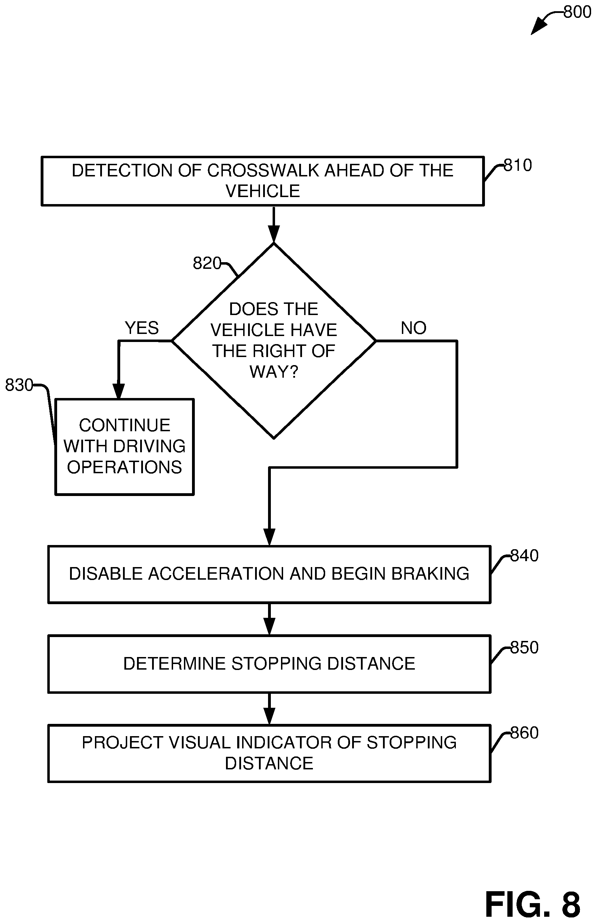

FIG. 8 illustrates a flow diagram 800 for a computer-implemented methodology to transmit vehicle stopping distance to a pedestrian in accordance with one or more embodiments described herein.

At 810, a crosswalk (e.g., crosswalk 103) or other crossing point (e.g., traffic light stop sign, intersection etc.) can be detected ahead of a vehicle (e.g., vehicle 102) by crosswalk identification component 160.

At 820, a determination of if the vehicle has a right of way of the crosswalk can be made (e.g., by right of way determination component 142). This determination can be made by right of way determination component 142 identifying pedestrians on or near the crosswalk and a determination of whether the pedestrians or the vehicle has the right of way. As described above in detail, this determination can be made utilizing one or more sensors, artificial intelligence models, and/or algorithms. In response to a YES determination, methodology 800 can proceed to step 830 and driving operations of the vehicle can continue. In response to a NO determination, methodology 800 can proceed to step 840.

At 840, in response to a determination that the vehicle does not have the right of way, acceleration of the vehicle can be disabled, and automatic braking of the vehicle can begin (e.g., by vehicle operations component 164).

At 850, a determination of stopping distance of the vehicle (e.g., vehicle 102) can be made (e.g., by stop distance determination component 155) based on the current speed and rate of deceleration of the vehicle as well as current road conditions such as weather and road gradient.

At 860, in response to a determination of the stopping distance, the vehicle (e.g., vehicle 102) can project a visual indicator (e.g., visual indicator 120) at the position the vehicle will come to a complete stop at based on the stopping distance.

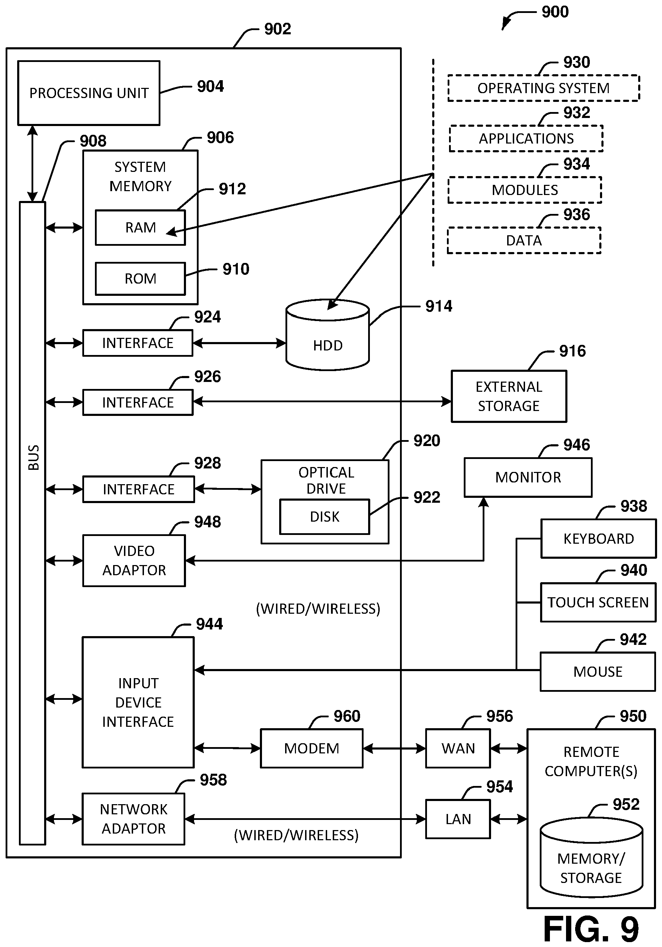

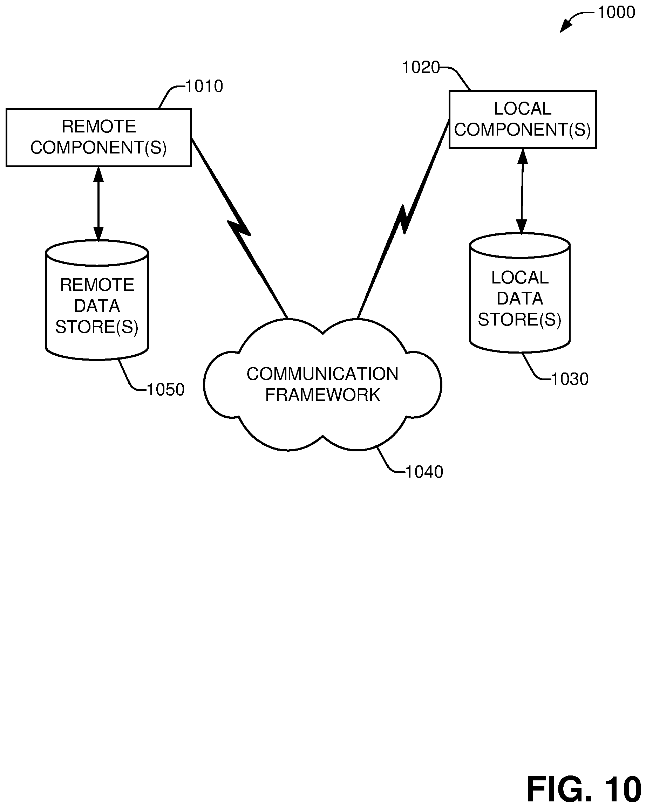

Turning next to FIGS. 9 and 10, a detailed description is provided of additional context for the one or more embodiments described herein with FIGS. 1-8.

In order to provide additional context for various embodiments described herein, FIG. 9 and the following discussion are intended to provide a brief, general description of a suitable computing environment 900 in which the various embodiments described herein can be implemented. While the embodiments have been described above in the general context of computer-executable instructions that can run on one or more computers, those skilled in the art will recognize that the embodiments can be also implemented in combination with other program modules and/or as a combination of hardware and software.

Generally, program modules include routines, programs, components, data structures, etc., that perform particular tasks or implement particular abstract data types. Moreover, those skilled in the art will appreciate that the methods can be practiced with other computer system configurations, including single-processor or multiprocessor computer systems, minicomputers, mainframe computers, IoT devices, distributed computing systems, as well as personal computers, hand-held computing devices, microprocessor-based or programmable consumer electronics, and the like, each of which can be operatively coupled to one or more associated devices.

The embodiments illustrated herein can be also practiced in distributed computing environments where certain tasks are performed by remote processing devices that are linked through a communications network. In a distributed computing environment, program modules can be located in both local and remote memory storage devices.

Computing devices typically include a variety of media, which can include computer-readable storage media, machine-readable storage media, and/or communications media, which two terms are used herein differently from one another as follows. Computer-readable storage media or machine-readable storage media can be any available storage media that can be accessed by the computer and includes both volatile and nonvolatile media, removable and non-removable media. By way of example, and not limitation, computer-readable storage media or machine-readable storage media can be implemented in connection with any method or technology for storage of information such as computer-readable or machine-readable instructions, program modules, structured data or unstructured data.

Computer-readable storage media can include, but are not limited to, random access memory (RAM), read only memory (ROM), electrically erasable programmable read only memory (EEPROM), flash memory or other memory technology, compact disk read only memory (CD-ROM), digital versatile disk (DVD), Blu-ray disc (BD) or other optical disk storage, magnetic cassettes, magnetic tape, magnetic disk storage or other magnetic storage devices, solid state drives or other solid state storage devices, or other tangible and/or non-transitory media which can be used to store desired information. In this regard, the terms "tangible" or "non-transitory" herein as applied to storage, memory or computer-readable media, are to be understood to exclude only propagating transitory signals per se as modifiers and do not relinquish rights to all standard storage, memory or computer-readable media that are not only propagating transitory signals per se.

Computer-readable storage media can be accessed by one or more local or remote computing devices, e.g., via access requests, queries or other data retrieval protocols, for a variety of operations with respect to the information stored by the medium.

Communications media typically embody computer-readable instructions, data structures, program modules or other structured or unstructured data in a data signal such as a modulated data signal, e.g., a carrier wave or other transport mechanism, and includes any information delivery or transport media. The term "modulated data signal" or signals refers to a signal that has one or more of its characteristics set or changed in such a manner as to encode information in one or more signals. By way of example, and not limitation, communication media include wired media, such as a wired network or direct-wired connection, and wireless media such as acoustic, RF, infrared and other wireless media.

With reference again to FIG. 9, the example environment 900 for implementing various embodiments of the aspects described herein includes a computer 902, the computer 902 including a processing unit 904, a system memory 906 and a system bus 908. The system bus 908 couples system components including, but not limited to, the system memory 906 to the processing unit 904. The processing unit 904 can be any of various commercially available processors and may include a cache memory. Dual microprocessors and other multi-processor architectures can also be employed as the processing unit 904.

The system bus 908 can be any of several types of bus structure that can further interconnect to a memory bus (with or without a memory controller), a peripheral bus, and a local bus using any of a variety of commercially available bus architectures. The system memory 906 includes ROM 910 and RAM 912. A basic input/output system (BIOS) can be stored in a non-volatile memory such as ROM, erasable programmable read only memory (EPROM), EEPROM, which BIOS contains the basic routines that help to transfer information between elements within the computer 902, such as during startup. The RAM 912 can also include a high-speed RAM such as static RAM for caching data.

The computer 902 further includes an internal hard disk drive (HDD) 914 (e.g., EIDE, SATA), one or more external storage devices 916 (e.g., a magnetic floppy disk drive (FDD) 916, a memory stick or flash drive reader, a memory card reader, etc.) and an optical disk drive 920 (e.g., which can read or write from a CD-ROM disc, a DVD, a BD, etc.). While the internal HDD 914 is illustrated as located within the computer 902, the internal HDD 914 can also be configured for external use in a suitable chassis (not shown). Additionally, while not shown in environment 900, a solid-state drive (SSD) could be used in addition to, or in place of, an HDD 914. The HDD 914, external storage device(s) 916 and optical disk drive 920 can be connected to the system bus 908 by an HDD interface 924, an external storage interface 926 and an optical drive interface 928, respectively. The interface 924 for external drive implementations can include at least one or both of Universal Serial Bus (USB) and Institute of Electrical and Electronics Engineers (IEEE) 1094 interface technologies. Other external drive connection technologies are within contemplation of the embodiments described herein.

The drives and their associated computer-readable storage media provide nonvolatile storage of data, data structures, computer-executable instructions, and so forth. For the computer 902, the drives and storage media accommodate the storage of any data in a suitable digital format. Although the description of computer-readable storage media above refers to respective types of storage devices, it should be appreciated by those skilled in the art that other types of storage media which are readable by a computer, whether presently existing or developed in the future, could also be used in the example operating environment, and further, that any such storage media can contain computer-executable instructions for performing the methods described herein.

A number of program modules can be stored in the drives and RAM 912, including an operating system 930, one or more application programs 932, other program modules 934 and program data 936. All or portions of the operating system, applications, modules, and/or data can also be cached in the RAM 912. The systems and methods described herein can be implemented utilizing various commercially available operating systems or combinations of operating systems.

Computer 902 can optionally comprise emulation technologies. For example, a hypervisor (not shown) or other intermediary can emulate a hardware environment for operating system 930, and the emulated hardware can optionally be different from the hardware illustrated in FIG. 9. In such an embodiment, operating system 930 can comprise one virtual machine (VM) of multiple VMs hosted at computer 902. Furthermore, operating system 930 can provide runtime environments, such as the Java runtime environment or the .NET framework, for applications 932. Runtime environments are consistent execution environments that allow applications 932 to run on any operating system that includes the runtime environment. Similarly, operating system 930 can support containers, and applications 932 can be in the form of containers, which are lightweight, standalone, executable packages of software that include, e.g., code, runtime, system tools, system libraries and settings for an application.

Further, computer 902 can comprise a security module, such as a trusted processing module (TPM). For instance with a TPM, boot components hash next in time boot components, and wait for a match of results to secured values, before loading a next boot component. This process can take place at any layer in the code execution stack of computer 902, e.g., applied at the application execution level or at the operating system (OS) kernel level, thereby enabling security at any level of code execution.

A user can enter commands and information into the computer 902 through one or more wired/wireless input devices, e.g., a keyboard 938, a touch screen 940, and a pointing device, such as a mouse 942. Other input devices (not shown) can include a microphone, an infrared (IR) remote control, a radio frequency (RF) remote control, or other remote control, a joystick, a virtual reality controller and/or virtual reality headset, a game pad, a stylus pen, an image input device, e.g., camera(s), a gesture sensor input device, a vision movement sensor input device, an emotion or facial detection device, a biometric input device, e.g., fingerprint or iris scanner, or the like. These and other input devices are often connected to the processing unit 904 through an input device interface 944 that can be coupled to the system bus 908, but can be connected by other interfaces, such as a parallel port, an IEEE 1094 serial port, a game port, a USB port, an IR interface, a BLUETOOTH^{®} interface, etc.

A monitor 946 or other type of display device can be also connected to the system bus 908 via an interface, such as a video adapter 948. In addition to the monitor 946, a computer typically includes other peripheral output devices (not shown), such as speakers, printers, etc.

The computer 902 can operate in a networked environment using logical connections via wired and/or wireless communications to one or more remote computers, such as a remote computer(s) 950. The remote computer(s) 950 can be a workstation, a server computer, a router, a personal computer, portable computer, microprocessor-based entertainment appliance, a peer device or other common network node, and typically includes many or all of the elements described relative to the computer 902, although, for purposes of brevity, only a memory/storage device 952 is illustrated. The logical connections depicted include wired/wireless connectivity to a local area network (LAN) 954 and/or larger networks, e.g., a wide area network (WAN) 956. Such LAN and WAN networking environments are commonplace in offices and companies, and facilitate enterprise-wide computer networks, such as intranets, all of which can connect to a global communications network, e.g., the internet.

When used in a LAN networking environment, the computer 902 can be connected to the local network 954 through a wired and/or wireless communication network interface or adapter 958. The adapter 958 can facilitate wired or wireless communication to the LAN 954, which can also include a wireless access point (AP) disposed thereon for communicating with the adapter 958 in a wireless mode.

When used in a WAN networking environment, the computer 902 can include a modem 960 or can be connected to a communications server on the WAN 956 via other means for establishing communications over the WAN 956, such as by way of the internet. The modem 960, which can be internal or external and a wired or wireless device, can be connected to the system bus 908 via the input device interface 944. In a networked environment, program modules depicted relative to the computer 902 or portions thereof, can be stored in the remote memory/storage device 952. It will be appreciated that the network connections shown are example and other means of establishing a communications link between the computers can be used.

When used in either a LAN or WAN networking environment, the computer 902 can access cloud storage systems or other network-based storage systems in addition to, or in place of, external storage devices 916 as described above. Generally, a connection between the computer 902 and a cloud storage system can be established over a LAN 954 or WAN 956 e.g., by the adapter 958 or modem 960, respectively. Upon connecting the computer 902 to an associated cloud storage system, the external storage interface 926 can, with the aid of the adapter 958 and/or modem 960, manage storage provided by the cloud storage system as it would other types of external storage. For instance, the external storage interface 926 can be configured to provide access to cloud storage sources as if those sources were physically connected to the computer 902.

The computer 902 can be operable to communicate with any wireless devices or entities operatively disposed in wireless communication, e.g., a printer, scanner, desktop and/or portable computer, portable data assistant, communications satellite, any piece of equipment or location associated with a wirelessly detectable tag (e.g., a kiosk, news stand, store shelf, etc.), and telephone. This can include Wireless Fidelity (Wi-Fi) and BLUETOOTH^{®} wireless technologies. Thus, the communication can be a predefined structure as with a conventional network or simply an ad hoc communication between at least two devices.

The above description includes non-limiting examples of the various embodiments. It is, of course, not possible to describe every conceivable combination of components or methodologies for purposes of describing the disclosed subject matter, and one skilled in the art may recognize that further combinations and permutations of the various embodiments are possible. The disclosed subject matter is intended to embrace all such alterations, modifications, and variations that fall within the spirit and scope of the appended claims.

Referring now to details of one or more elements illustrated at FIG. 10, an illustrative cloud computing environment 1000 is depicted. FIG. 10 is a schematic block diagram of a computing environment 1000 with which the disclosed subject matter can interact. The system 1000 comprises one or more remote component(s) 1010. The remote component(s) 1010 can be hardware and/or software (e.g., threads, processes, computing devices). In some embodiments, remote component(s) 1010 can be a distributed computer system, connected to a local automatic scaling component and/or programs that use the resources of a distributed computer system, via communication framework 1040. Communication framework 1040 can comprise wired network devices, wireless network devices, mobile devices, wearable devices, radio access network devices, gateway devices, femtocell devices, servers, etc.

The system 1000 also comprises one or more local component(s) 1020. The local component(s) 1020 can be hardware and/or software (e.g., threads, processes, computing devices). In some embodiments, local component(s) 1020 can comprise an automatic scaling component and/or programs that communicate / use the remote resources 1010 and 1020, etc., connected to a remotely located distributed computing system via communication framework 1040.

One possible communication between a remote component(s) 1010 and a local component(s) 1020 can be in the form of a data packet adapted to be transmitted between two or more computer processes. Another possible communication between a remote component(s) 1010 and a local component(s) 1020 can be in the form of circuit-switched data adapted to be transmitted between two or more computer processes in radio time slots. The system 1000 comprises a communication framework 1040 that can be employed to facilitate communications between the remote component(s) 1010 and the local component(s) 1020, and can comprise an air interface, e.g., Uu interface of a UMTS network, via a long-term evolution (LTE) network, etc. Remote component(s) 1010 can be operably connected to one or more remote data store(s) 1050, such as a hard drive, solid state drive, SIM card, device memory, etc., that can be employed to store information on the remote component(s) 1010 side of communication framework 1040. Similarly, local component(s) 1020 can be operably connected to one or more local data store(s) 1030, that can be employed to store information on the local component(s) 1020 side of communication framework 1040.

With regard to the various functions performed by the above described components, devices, circuits, systems, etc., the terms (including a reference to a "means") used to describe such components are intended to also include, unless otherwise indicated, any structure(s) which performs the specified function of the described component (e.g., a functional equivalent), even if not structurally equivalent to the disclosed structure. In addition, while a particular feature of the disclosed subject matter may have been disclosed with respect to only one of several implementations, such feature may be combined with one or more other features of the other implementations as may be desired and advantageous for any given or particular application.

The terms "exemplary" and/or "demonstrative" as used herein are intended to mean serving as an example, instance, or illustration. For the avoidance of doubt, the subject matter disclosed herein is not limited by such examples. In addition, any aspect or design described herein as "exemplary" and/or "demonstrative" is not necessarily to be construed as preferred or advantageous over other aspects or designs, nor is it meant to preclude equivalent structures and techniques known to one skilled in the art. Furthermore, to the extent that the terms "includes," "has," "contains," and other similar words are used in either the detailed description or the claims, such terms are intended to be inclusive - in a manner similar to the term "comprising" as an open transition word - without precluding any additional or other elements.

The term "or" as used herein is intended to mean an inclusive "or" rather than an exclusive "or." For example, the phrase "A or B" is intended to include instances of A, B, and both A and B. Additionally, the articles "a" and "an" as used in this application and the appended claims should generally be construed to mean "one or more" unless either otherwise specified or clear from the context to be directed to a singular form.

The term "set" as employed herein excludes the empty set, i.e., the set with no elements therein. Thus, a "set" in the subject disclosure includes one or more elements or entities. Likewise, the term "group" as utilized herein refers to a collection of one or more entities.

The terms "first," "second," "third," and so forth, as used in the claims, unless otherwise clear by context, is for clarity only and doesn't otherwise indicate or imply any order in time. For instance, "a first determination," "a second determination," and "a third determination," does not indicate or imply that the first determination is to be made before the second determination, or vice versa, etc.

As used in this disclosure, in some embodiments, the terms "component," "system" and the like are intended to refer to, or comprise, a computer-related entity or an entity related to an operational apparatus with one or more specific functionalities, wherein the entity can be either hardware, a combination of hardware and software, software, or software in execution. As an example, a component can be, but is not limited to being, a process running on a processor, a processor, an object, an executable, a thread of execution, computer-executable instructions, a program, and/or a computer. By way of illustration and not limitation, both an application running on a server and the server can be a component.

One or more components can reside within a process and/or thread of execution and a component can be localized on one computer and/or distributed between two or more computers. In addition, these components can execute from various computer readable media having various data structures stored thereon. The components can communicate via local and/or remote processes such as in accordance with a signal having one or more data packets (e.g., data from one component interacting with another component in a local system, distributed system, and/or across a network such as the internet with other systems via the signal). As another example, a component can be an apparatus with specific functionality provided by mechanical parts operated by electric or electronic circuitry, which is operated by a software application or firmware application executed by a processor, wherein the processor can be internal or external to the apparatus and executes at least a part of the software or firmware application. As yet another example, a component can be an apparatus that provides specific functionality through electronic components without mechanical parts, the electronic components can comprise a processor therein to execute software or firmware that confers at least in part the functionality of the electronic components. While various components have been illustrated as separate components, it will be appreciated that multiple components can be implemented as a single component, or a single component can be implemented as multiple components, without departing from example embodiments.

The term "facilitate" as used herein is in the context of a system, device or component "facilitating" one or more actions or operations, in respect of the nature of complex computing environments in which multiple components and/or multiple devices can be involved in some computing operations. Non-limiting examples of actions that may or may not involve multiple components and/or multiple devices comprise transmitting or receiving data, establishing a connection between devices, determining intermediate results toward obtaining a result, etc. In this regard, a computing device or component can facilitate an operation by playing any part in accomplishing the operation. When operations of a component are described herein, it is thus to be understood that where the operations are described as facilitated by the component, the operations can be optionally completed with the cooperation of one or more other computing devices or components, such as, but not limited to, sensors, antennae, audio and/or visual output devices, other devices, etc.

Further, the various embodiments can be implemented as a method, apparatus or article of manufacture using standard programming and/or engineering techniques to produce software, firmware, hardware, or any combination thereof to control a computer to implement the disclosed subject matter. The term "article of manufacture" as used herein is intended to encompass a computer program accessible from any computer-readable (or machine-readable) device or computer-readable (or machine-readable) storage/communications media. For example, computer readable storage media can comprise, but are not limited to, magnetic storage devices (e.g., hard disk, floppy disk, magnetic strips), optical disks (e.g., compact disk (CD), digital versatile disk (DVD)), smart cards, and flash memory devices (e.g., card, stick, key drive). Of course, those skilled in the art will recognize many modifications can be made to this configuration without departing from the scope or spirit of the various embodiments.

Moreover, terms such as "mobile device equipment," "mobile station," "mobile," "subscriber station," "access terminal," "terminal," "handset," "communication device," "mobile device" (and/or terms representing similar terminology) can refer to a wireless device utilized by a subscriber or mobile device of a wireless communication service to receive or convey data, control, voice, video, sound, gaming or substantially any data-stream or signaling-stream. The foregoing terms are utilized interchangeably herein and with reference to the related drawings. Likewise, the terms "access point (AP)," "Base Station (BS)," "BS transceiver," "BS device," "cell site," "cell site device," "gNode B (gNB)," "evolved Node B (eNode B, eNB)," "home Node B (HNB)" and the like, refer to wireless network components or appliances that transmit and/or receive data, control, voice, video, sound, gaming or substantially any data-stream or signaling-stream from one or more subscriber stations. Data and signaling streams can be packetized or frame-based flows.

Furthermore, the terms "device," "communication device," "mobile device," "subscriber," "client entity," "consumer," "client entity," "entity" and the like are employed interchangeably throughout, unless context warrants particular distinctions among the terms. It should be appreciated that such terms can refer to human entities or automated components supported through artificial intelligence (e.g., a capacity to make inference based on complex mathematical formalisms), which can provide simulated vision, sound recognition and so forth.

It should be noted that although various aspects and embodiments are described herein in the context of 5G or other next generation networks, the disclosed aspects are not limited to a 5G implementation, and can be applied in other network next generation implementations, such as sixth generation (6G), or other wireless systems. In this regard, aspects or features of the disclosed embodiments can be exploited in substantially any wireless communication technology. Such wireless communication technologies can include universal mobile telecommunications system (UMTS), global system for mobile communication (GSM), code division multiple access (CDMA), wideband CDMA (WCMDA), CDMA2000, time division multiple access (TDMA), frequency division multiple access (FDMA), multi-carrier CDMA (MC-CDMA), single-carrier CDMA (SC-CDMA), single-carrier FDMA (SC-FDMA), orthogonal frequency division multiplexing (OFDM), discrete Fourier transform spread OFDM (DFT-spread OFDM), filter bank based multi-carrier (FBMC), zero tail DFT-spread-OFDM (ZT DFT-s-OFDM), generalized frequency division multiplexing (GFDM), fixed mobile convergence (FMC), universal fixed mobile convergence (UFMC), unique word OFDM (UW-OFDM), unique word DFT-spread OFDM (UW DFT-Spread-OFDM), cyclic prefix OFDM (CP-OFDM), resource-block-filtered OFDM, wireless fidelity (Wi-Fi), worldwide interoperability for microwave access (WiMAX), wireless local area network (WLAN), general packet radio service (GPRS), enhanced GPRS, third generation partnership project (3GPP), long term evolution (LTE), 5G, third generation partnership project 2 (3GPP2), ultra-mobile broadband (UMB), high speed packet access (HSPA), evolved high speed packet access (HSPA+), high-speed downlink packet access (HSDPA), high-speed uplink packet access (HSUPA), Zigbee, or another institute of electrical and electronics engineers (IEEE) 802.12 technology.

The description of illustrated embodiments of the subject disclosure as provided herein, including what is described in the Abstract, is not intended to be exhaustive or to limit the disclosed embodiments to the precise forms disclosed. While specific embodiments and examples are described herein for illustrative purposes, various modifications are possible that are considered within the scope of such embodiments and examples, as one skilled in the art can recognize. In this regard, while the subject matter has been described herein in connection with various embodiments and corresponding drawings, where applicable, it is to be understood that other similar embodiments can be used or modifications and additions can be made to the described embodiments for performing the same, similar, alternative, or substitute function of the disclosed subject matter without deviating therefrom. Therefore, the disclosed subject matter should not be limited to any single embodiment described herein, but rather should be construed in breadth and scope in accordance with the appended claims below.

Further aspects of the invention are provided by the subject matter of the following clauses:
1. A system on board a vehicle, the system comprising: a memory that stores computer executable components; a processor that executes computer executable components stored in the memory, wherein the computer executable components comprise: a stop distance determination component that determines a position where the vehicle will stop based on current speed of the vehicle and rate of deceleration; and a stop notification component that projects a visual indicator of the position onto a surface ahead of the vehicle.
2. The system of any preceding clause, wherein the stop notification component projects the visual indicator continuously until the vehicle comes to a complete stop.
3. The system of any preceding clause, wherein the visual indicator comprises a stripe orientated horizontally to an orientation of the vehicle.
4. The system of any preceding clause, wherein the computer executable component further comprise: a crosswalk identification component that identifies a crosswalk on the surface ahead of the vehicle; and a right of way determination component that scans the crosswalk and a surrounding area to determine if the vehicle has a right of way to pass over the crosswalk, wherein the stop notification component determines the position based on the determination that the vehicle does not have the right of way.
5. The system of any preceding clause, wherein the computer executable component further comprise: a vehicle operations component that automatically disables acceleration of the vehicle based on the determination that the vehicle does not have the right of way.
6. The system any preceding clause, wherein the visual indicator comprises flashing of the stripe.
7. The system any preceding clause, wherein the stop notification component further determines if the position is located before the crosswalk, and wherein the visual indicator comprises a first pattern if the position is located before the crosswalk and the visual indicator comprises a second pattern if the position is not located before the crosswalk.
8. A computer implemented method comprising: determining, by a device comprising a processor located on a vehicle, a position where the vehicle will stop based on current speed of the vehicle and rate of deceleration; and projecting, by the device, a visual indicator of the position onto a surface ahead of the vehicle.
9. The computer implemented method of any preceding clause, wherein the visual indicator is projected continuously until the vehicle comes to a complete stop.
10. The computer implemented method of any preceding clause, wherein the visual indicator comprises a stripe orientated horizontally to an orientation of the vehicle.
11. The computer implemented method of any preceding clause, further comprising: identifying, by the device, a crosswalk on the surface ahead of the vehicle; and scanning, by the device, the crosswalk and a surrounding area for pedestrians; and determining, by the, if the vehicle has a right of way to pass over the crosswalk, wherein the position where the vehicle will stop is actuated based on the determination that the vehicle does not have the right of way.
12. The computer implemented method of any preceding clause, further comprising: disabling, by the device, acceleration of the vehicle based on the determination that the vehicle does not have the right of way.
13. The computer implemented method of any preceding clause, wherein the visual indicator comprises flashing of the stripe.
14. The computer implemented method of any preceding clause, further comprising: determining, by the device, if the position is located before the crosswalk, and wherein the visual indicator comprises a first pattern if the position is located before the crosswalk and the visual indicator comprises a second pattern if the position is not located before the crosswalk.
15. A computer program product comprising a computer readable storage medium having program instructions embodied therewith, the program instructions executable by a processor to cause the processor to: determine a position where the vehicle will stop based on current speed of the vehicle and rate of deceleration; and project a visual indicator of the position onto a surface ahead of the vehicle.
16. The computer program product of any preceding clause, wherein the visual indicator is projected continuously until the vehicle comes to a complete stop.
17. The computer program product of any preceding clause, wherein the visual indicator comprises a stripe orientated horizontally to an orientation of the vehicle.
18. The computer program product of any preceding clause, wherein the program instructions are further executable by the processor to cause the processor to: identify a crosswalk on the surface ahead of the vehicle; and scan the crosswalk and a surrounding area for pedestrians; and determine, if the vehicle has a right of way to pass over the crosswalk, wherein the position where the vehicle will stop is actuated based on the determination that the vehicle does not have the right of way.
19. The computer program product of any preceding clause, wherein the program instructions are further executable by the processor to cause the processor to: in response to a determination that the vehicle does not have the right of way, disable acceleration of the vehicle.
20. The computer program product of any preceding clause, the visual indicator comprises flashing of the stripe.

## Claims

1. A system on board a vehicle, the system comprising:
a memory that stores computer executable components;
a processor that executes computer executable components stored in the memory, wherein the computer executable components comprise:
a stop distance determination component that determines a position where the vehicle will stop based on current speed of the vehicle and rate of deceleration; and
a stop notification component that projects a visual indicator of the position onto a surface ahead of the vehicle.

2. The system of claim 1, wherein the stop notification component projects the visual indicator continuously until the vehicle comes to a complete stop.

3. The system of claim 1, wherein the visual indicator comprises a stripe orientated horizontally to an orientation of the vehicle.

4. The system of claim 1, wherein the computer executable component further comprise:
a crosswalk identification component that identifies a crosswalk on the surface ahead of the vehicle; and
a right of way determination component that scans the crosswalk and a surrounding area to determine if the vehicle has a right of way to pass over the crosswalk, wherein the stop notification component determines the position based on the determination that the vehicle does not have the right of way.

5. The system of claim 4, wherein the computer executable component further comprise:
a vehicle operations component that automatically disables acceleration of the vehicle based on the determination that the vehicle does not have the right of way.

6. The system of claim 3, wherein the visual indicator comprises flashing of the stripe.

7. The system of claim 4, wherein the stop notification component further determines if the position is located before the crosswalk, and wherein the visual indicator comprises a first pattern if the position is located before the crosswalk and the visual indicator comprises a second pattern if the position is not located before the crosswalk.

8. A computer implemented method comprising:
determining, by a device comprising a processor located on a vehicle, a position where the vehicle will stop based on current speed of the vehicle and rate of deceleration; and
projecting, by the device, a visual indicator of the position onto a surface ahead of the vehicle.

9. The computer implemented method of claim 8, wherein the visual indicator is projected continuously until the vehicle comes to a complete stop.

10. The computer implemented method of claim 8, wherein the visual indicator comprises a stripe orientated horizontally to an orientation of the vehicle.

11. The computer implemented method of claim 8, further comprising:
identifying, by the device, a crosswalk on the surface ahead of the vehicle; and
scanning, by the device, the crosswalk and a surrounding area for pedestrians; and
determining, by the device, if the vehicle has a right of way to pass over the crosswalk, wherein the determination where the vehicle will stop is actuated based on the determination that the vehicle does not have the right of way.

12. The computer implemented method of claim 11, further comprising:
disabling, by the device, acceleration of the vehicle based on the determination that the vehicle does not have the right of way.

13. The computer implemented method of claim 10, wherein the visual indicator comprises flashing of the stripe.

14. The computer implemented method of claim 11, further comprising:
determining, by the device, if the position is located before the crosswalk, and wherein the visual indicator comprises a first pattern if the position is located before the crosswalk and the visual indicator comprises a second pattern if the position is not located before the crosswalk.

15. A computer program product comprising a computer readable storage medium having program instructions embodied therewith, the program instructions executable by a processor to cause the processor to:
determine a position where a vehicle will stop based on current speed of the vehicle and rate of deceleration; and
project a visual indicator of the position onto a surface ahead of the vehicle.
